# EUROPEAN PATENT APPLICATION

(11) **EP 3 018 670 A1**
(43) Date of publication of application: **11.05.2016**
(21) Application number: 15184361.2
(22) Date of filing: 08.09.2015
(51) Int. Cl.: H01G 11/38, H01M 4/62

(54) **CARBON ELECTRODE OF ELECTROCHEMICAL CAPACITOR AS A PART OF ELECTROCHEMICAL SYSTEM FOR ENERGY STORAGE**

(30) Priority: 09.09.2014 PL 40937314
(71) Applicant: Politechnika Poznanska, 60-965 Poznan (PL)
(72) Inventor: Ko odziej, Adam, 21-010 czna (PL); Fic, Krzysztof, 61-255 Pozna (PL); Fr ckowiak, El bieta, 61-695 Pozna (PL)
(74) Representative: Trawinska, Urszula

(57) **Abstract**

Carbon electrode of the electrochemical capacitor being a part of the electrochemical energy storage system in which a binding agent of an electrode's carbon material is a biodegradable biopolymer which, in its structure, contains acetylglucosamine monomer, preferably chitin.

## Description

The invention relates to a carbon electrode of an electrochemical capacitor being a part of an electrochemical system for energy storage. Two electrodes in an electrolyte solution have an application as a system for energy storage.

The electrochemical capacitor, also known as a supercapacitor, works by charge accumulation in the electric double layer as a result of electrostatic interactions. The nature of these interactions enables fast charging/discharging in the devices which require a delivery of large quantities of energy in the shortest possible time. So far, electrochemical capacitors have been applied in hybrid vehicles, trams, planes as well as devices regulating voltage in the system. Their essential advantage is the possibility of charging in a short period of time (in milliseconds) and their stability in a cyclic operation; modem capacitors can be charged and discharged even a few hundred thousand cycles without a significant decrease in capacitance.

The amount of energy stored by electrochemical capacitors is still rather moderate in comparison with the energy that can be stored by other devices used for this purpose e.g. accumulators, hence their development has been currently focused on improving capacitance and voltage parameters. Both of the parameters are related to electrode material features which should be characterized by a large specific surface area, high conductivity and, as a result, a perfect charge propagation in the electrode.

The electrochemical system for energy storage (electrochemical capacitor) is composed of carbon electrodes separated by a separator and immersed in an electrolyte. The electrode of the electrochemical capacitor is typically made of a material with a developed specific surface area e.g. activated carbon which is characterized by a large specific surface area and moderate electrical conductivity as well as acetylene black which functions as a percolator improving electrical contact of activated carbon particles and a binding agent turning particles of these materials into a compact electrode mass.

Carbon material, characterized by a high number of pores, constitutes 75 - 85 % of the whole electrode's weight. The size and the shape of these pores have a crucial meaning; these are the factors deciding if ions in the electrolyte are able to penetrate the electrode [Beguin F., Presser V., Balducci A., Frackowiak E., Carbon and electrolytes for advanced supercapacitors. Advanced Materials, 2014, 26, 2219-2251] and accumulate energy at the electrode/electrolyte interface. The subject of the current research is to obtain carbon materials from organic waste. So far, activated carbon has been successfully obtained from tobacco leaves [Beguin F., Frackowiak E., Kleszyk P., *Production of activated carbon from tobacco leaves by simultaneous carbonization and self-activation and the activated carbon thus obtained*. PCT/PL2013/050030] and coconut shells [Wenming Qiao, Yozo Korai, Isao Mochida , Yuuichi Hori, Takeshi Maeda, Carbon, 2002, 40, 351-358]. The materials obtained from natural waste turned out to be a good alternative to commercial products [Pohlmann S., Lobato B., Centeno T. A., Balducci A., The influence of pore size and surface area of activated carbon on the performance of ionic liquid based supercapacitors, Physical Chemistry Chemical Physics 2013,15, 17287-17294]. Moreover, they do not need the activation process which requires the use of concentrated potassium hydroxide, phosphoric acid (V) or zinc chloride, all of which are harmful for the environment.

Acetylene black is a carbon material with a very high content of elemental carbon. It is obtained by the decomposition of acetylene under increased pressure. The material prepared in such a way accounts for 5 - 10% of the electrode's weight and, as it was mentioned before, improves its conductivity.

Both the carbon materials (i.e. activated carbon and carbon black) form the electrochemical capacitor's electrode due to a binding agent whose task is to create a mechanically and chemically stable mass. At the same time, the agent should have the lowest possible tendency to close the access to activated carbon's pores. However, hydrophobic fluoropolymers are the materials most often used as the binding agents. The most popular are polyvinylidene fluoride (PVdF) [Lewandowski A., Zajder M., Frackowiak E., Beguin F., Supercapacitor based on activated carbon and polyethylene oxide-KOH-H2O polymer electrolyte. Electrochimica Acta, 2001, 46, 2777-2780] and polytetrafluoroethylene (PTFE) [Bonnefoi L., Simon P., Fauvarque J. F., Sarrazin C., Sarrau J. F., Dugast A., Electrode compositions for carbon power supercapacitors. Journal of Power Sources, 1999, 80, 149-155], commonly known as Teflon®. Thanks to them, it is possible to produce carbon electrodes with different shapes like pills or tapes with a high resistance to mechanical and chemical factors. Besides, in case of PTFE it is also possible to obtain products distinguished by a high elasticity. These systems are also characterized by good parameters of operation; however, their application involves the change of distribution and size of pores which can be penetrated by an electrolyte. Moreover, fluorine compounds are highly toxic, which leads to serious problems with waste management.

Fluorine is a non-metal of the highest electronegativity; it reacts with the majority of elements. Gaseous fluorine is such an aggressive reagent that it readily dissolves glass, metals and also oxidizes water. Due to this fact, storage of this gas requires a special infrastructure, which only generates exorbitant costs.

Fluorine compounds, despite their unquestionable biological importance, also have a number of drawbacks. The toxicity manifests itself in the disturbance of enzymatic processes [Chlubek D.: Fluoride and oxidative stress. Fluoride. 2003, 36, 217-228], carbohydrate and lipid metabolism [Zhang Y., Sun X.C., Sun G.F., Liu S., Wang L.: DNA damage induced by fluoride in rat osteoblasts. Fluoride. 2006, 39, 191-194] and also in a negative effect on hormone production [Menoyo I., Puche R. C., Rigalli A.: Fluoride-induced resistance to insulin in the rat. Fluoride, 2008, 41, 260-269]. Moreover, fluorine derivatives are easily assimilable, which significantly increases the risk of poisoning even in case of extremely small doses. Increased concentration of fluorine compounds in water or in soil would unavoidably lead to extinction of living organisms on a contaminated area. In addition, some of these compounds cause serious bums.

In order to eliminate these risks, some scientists took upon themselves the task of working on "green" alternatives to conventional polymers as a binder. Cellulose was proposed to be used as a binding agent for carbon electrodes in one of the studies [Böckenfeld N., Jeong S. S., Winter M., Passerini S., Balducci A.: Natural, cheap and environmentally friendly binder for supercapacitors. Journal of Power Sources, 2013, 221, 14-20]. Two ways of obtaining an electrode mixture were presented. The former was based on dissolving a biopolymer in an ionic fluid and a long-lasting process of homogenization of the mixture. The latter consisted in creating a nanostructed cellulose suspension in water, enriched with a surface active agent and polyethylene glycol. The obtained products were characterized by very good parameters of operation, however the presented methods are not free from drawbacks. One of them involves the use of an ionic fluid of low biodegradability. The other, in turn, requires surfactants and synthetic polymers which are not removed from the electrode material and, consequently, they can pose a threat to the environment.

The subject of the invention is the electrode of the electrochemical capacitor being a part of an electrochemical system for energy storage. In the electrode, a conventional binding agent based on harmful fluorine, was replaced by a biodegradable and environmentally-friendly biopolymer which, in its structure, contains acetylglucosamine monomer, preferably ecologically positive chitin.

Chitin is a natural biopolymer (polysaccharide) which is a building material of arthropod shells. Due to huge amount of waste generated by the food industry, this material can be treated as cheap and commonly available. Moreover, chitin, as a biopolymer, is easily biodegradable and is not accumulated in the environment. Application of this material as a binding agent for carbon electrodes would allow building an environmentally-friendly electrochemical capacitor.

The supercapacitor consisting of two carbon electrodes, a separator and an electrolyte in the form of an aqueous solution of lithium sulphate (VI) is characterized by the following technical and economical benefits:
- high voltage of stable operation in an aqueous environment (up to 1.6 V),
- good charge propagation,
- high reversibility of the charge/discharge process (over 95%),
- its assembly does not require an inert gas atmosphere, which significantly reduces production costs,
- the lack of fluorine compounds allows treating such a system as non-toxic and environmentally-friendly.

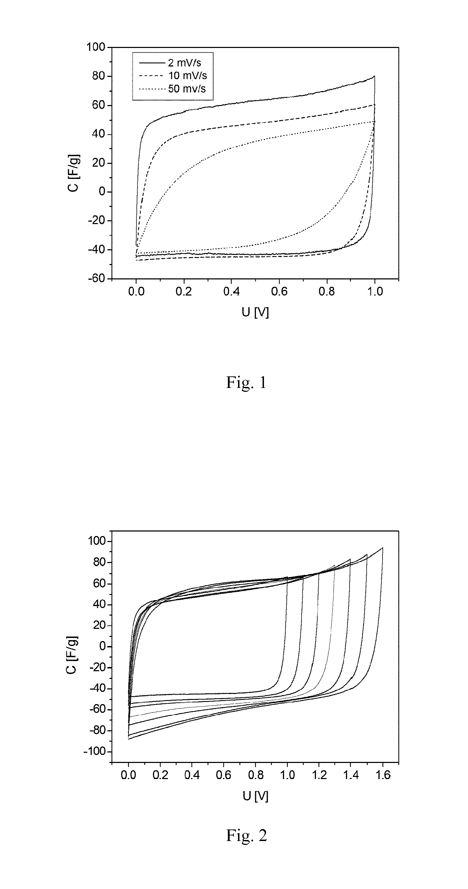

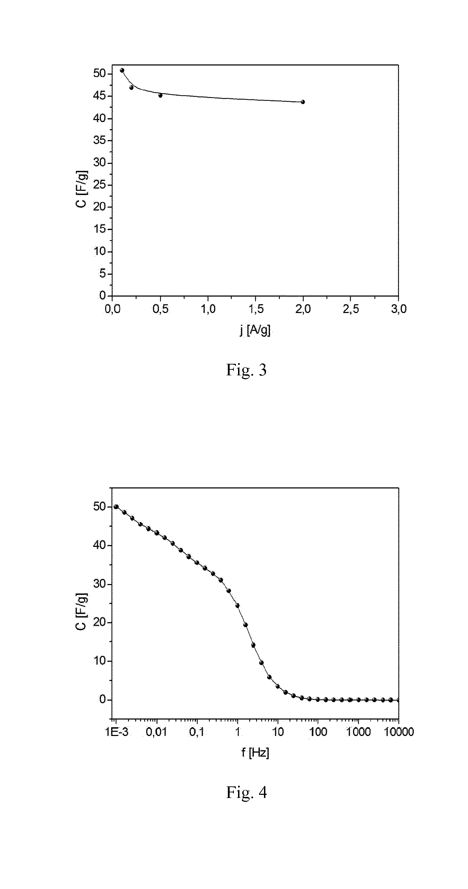

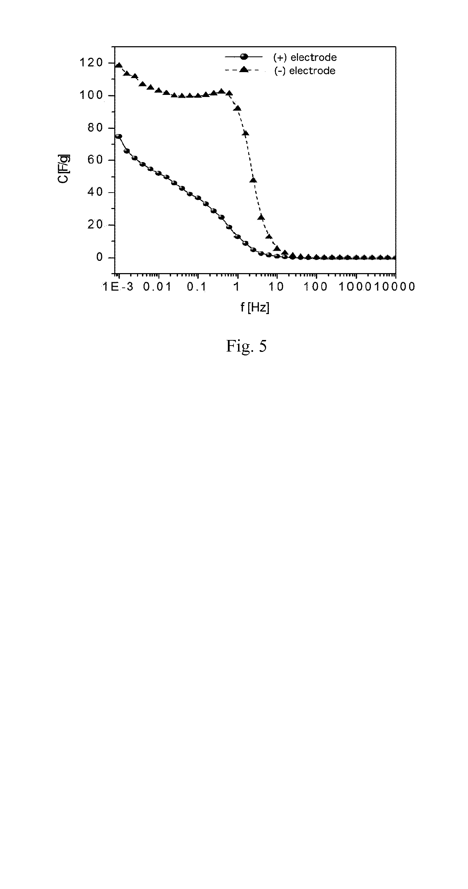

The performance of a device, as a demonstration of applying the invention i.e. based on electrodes bound by chitin, is presented in the following figures, where fig.1 presents cyclic voltammograms for various sweep rates (1 - 50 mV/s), fig.2 presents the maximal voltage of the capacitor's operation, fig.3 illustrates the relation between the system's capacity and the discharge current density, fig.4 presents the spectrum of electrochemical impedance spectroscopy of the capacitor and fig.5 impedance spectra for particular electrodes.

The demonstrated model contains the electrodes made from activated carbon (75%), acetylene black (5%) and dissolved chitin (20%). The electrodes with a diameter of 10 mm were obtained by pressing the said homogenous mixture with a hydraulic press. They were subsequently placed in an electrochemical vessel, filled with 1 mol L⁻¹ lithium sulphate (VI) solution as electrolyte, and separated with a separator.

The values of the capacitor's capacity with the electrode as per the invention reach 50 F g⁻¹ depending on the discharge current density. The result was empirically confirmed by other electrochemical techniques i.e. cyclic voltammetry (the scope of sweep rate from 1 mV s⁻¹ to 100 mV s⁻¹) and electrochemical impedance spectroscopy (the frequency range from 100 kHz to 1 mHz). Cyclic voltammetry shows a good charge propagation when the sweep rate does not exceed 20 mV s ⁻¹. The decrease in the capacitor's capacity along with the increase in the sweep rate results from the effect of ion solvation by water molecules, i.e. hydration reaction, and their hindered mobility in the electrode's porous structure. The increase in the discharge current density also causes the decrease in the capacity value from 50 F g ⁻¹ at 100 mA g ⁻¹ to 45 F g ⁻¹ at current density of 2 A g⁻¹. Electrochemical impedance spectroscopy confirmed the above relations. With a low frequency (1 mHz), the system capacity equals 50 F g ⁻¹, whereas with 1 Hz, the value is reduced to 25 F g ⁻¹.

## Claims

1. Carbon electrode of the electrochemical capacitor being a part of an electrochemical system for energy storage **characterised in that** a binding agent of an electrode's carbon material in a carbon electrode electrochemical capacitor is a biodegradable biopolymer which, in its structure, contains acetylglucosamine monomer, preferably chitin.
